# EUROPEAN PATENT APPLICATION

(11) **EP 4 174 978 A1**
(43) Date of publication of application: **03.05.2023**
(21) Application number: 21205332.6
(22) Date of filing: 28.10.2021
(51) Int. Cl.: H01M 4/13, H01M 10/052, H01M 4/133, H01M 4/134, H01M 4/1393, H01M 4/1395, H01M 4/38, H01M 4/48, H01M 4/58, H01M 10/0525, H01M 10/0583, H01M 10/0585, H01M 10/0587, H01M 10/42, H01M 10/52, H01M 4/04, H01M 10/058

(54) **BATTERY CELL COMPRISING DEGASSING CHANNELS AND/OR PATHS OF WEAKNESS**

(71) Applicant: Lilium eAircraft GmbH, 82234 Wessling (DE)
(72) Inventor: SCHEILE, Felix, 80801 Munich (DE); FORSTERMANN, Dominic, 80331 Munich (DE); KRAFFT, Roman, 72764 Reutlingen (DE)
(74) Representative: Feller, Frank

(57) **Abstract**

The present invention relates to a high-performance battery cell (10) for driving an electric vehicle, in particular an electric aircraft, comprising a plurality of layers (12) stacked one to another to form a cell stack (100; 200; 300; 400), the cell stack (100; 200; 300; 400) comprising at least two electrode layers (102, 104; 202, 204; 302, 304; 402, 404) comprising a cathode layer and an anode layer, and coating layers (120, 122, 124; 220, 222, 224; 320, 322, 324; 420, 422, 424) applied to the electrode layers (102, 104; 202, 204; 302, 304; 402, 404), wherein at least one of the electrode layers (102, 104; 202, 204; 302, 304; 402, 404) and/or at least one of the coating layers (120, 122, 124; 220, 222, 224; 320, 322, 324; 420, 422, 424) comprises at least one degassing channel (16) connecting an inner portion of the cell stack (100; 300; 400) with an edge portion of the cell stack (100; 300; 400), and/or at least one weakened portion (202a,b, 204a,b; 302a,b, 304a,b) pre-defining at least one path of weakness connecting an inner portion of the cell stack (200; 300; 400) with an edge portion of the cell stack (200; 300; 400).

## Description

The present invention relates to a high-performance battery cell for driving an electric vehicle, in particular an electric aircraft, comprising a plurality of layers stacked one to another to form a cell stack, the layers comprising at least two electrode layers comprising a cathode layer and an anode layer, and coating layers applied to the electrode layers.

With increasing energy density and power requirements of current and future battery cells, the safety and thermal runaway (TR) behaviour becomes more and more challenging. Based on the large amounts of energy stored within the small footprint of the cells active material, a controllable reaction during TR becomes more and more difficult.

Thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. Reasons for TR may be short circuits, overcharging, excessive currents when charging, discharging, or the like.

During TR, an accumulation of gas in between the layers of a cell's internal layer structure is one of the most severe contributors to an explosion-type reaction of the cell, as the gas is trapped until the pressure can overcome the seal generated by the stack or jelly roll itself. The effect is aggravated by a compression of the cell stack, as e.g. used in pouch-type cells, as it further increases the pressure inside of the cell stack before failure.

Some new cell chemistries, e.g. those based around conversion materials, require significant additional stack pressure for electrochemical performance, increasing the severity of the problem.

Until now, the energy density of a cell (and therefore its cathode and anode materials) had to be picked in such way that severe thermal runaway cases were prohibited by the reaction of the materials itself. This task was feasible, as the specific energy (stored energy per mass of cell) was low enough for the thermal mass of the cell to absorb considerable amounts of energy. Recent work, however, has demonstrated that the severity of the reaction scales exponentially with the specific energy, and hence limits this approach for high-specific energy cells. The development in lithium-ion batteries (LIB) is driven by chemists, chemical and mechanical engineers focussing on different points in the safety and performance development. To allow for increased cell safety the chemists portfolio was mainly limited to purely chemistry-driven measures, such as the coating mentioned previously, in most cases. The chemical and mechanical engineering departments of cell manufacturers, on the other hand, have so far primarily looked at degassing mechanisms via the cells casing material itself and not the cell stack specifically, rated breaking points in the pouch sealing area or burst membranes in prismatic lithium-ion batteries. Due to the low performance requirements and lower compression forces acting on the cell stack with presently used chemistries, current solutions satisfy the requirements. Other typical measures currently used to increase the controllability of cells are specific surface coatings applied to the active material or separator.

Current cell designs do not feature specific features that allow degassing from between the electrode layers of a cell stack or windings of a jelly roll. Furthermore, coatings of the active material (anode and cathode) can have a direct impact on the electrochemical behaviour of the electrodes, e.g. increasing the interfacial resistance, and can hence decrease the cells performance.

It is therefore an object of the present invention, to provide a high-performance battery cell for driving an electric vehicle, in particular an electric aircraft, with increased battery cell safety during thermal runaway.

According to a first aspect of the present invention, this object is achieved by a high-performance battery cell for driving an electric vehicle, in particular an electric aircraft, comprising a plurality of layers stacked one to another to form a cell stack, the layers comprising at least two electrode layers comprising a cathode layer and an anode layer, and coating layers applied to the electrode layers, wherein at least one of the electrode layers and/or at least one of the coating layers comprises at least one degassing channel connecting an inner portion of the cell stack with an edge portion of the cell stack, and/or at least one weakened portion pre-defining at least one path of weakness connecting an inner portion of the cell stack with an edge portion of the cell stack.

Hence, within the present disclosure in general one cell stack of a battery cell is considered, wherein preferably a plurality of battery cells and cell stacks, respectively, may be provided. Such cell stack comprises at least two electrodes, namely an anode and a cathode. In particular, the electrodes may be electrode foils made of a metal material, specifically aluminium or an aluminium alloy. The coating layers serve as active material for the battery cell and may preferably be made of a porous material. The anode coating preferably comprises graphite, silicone, silicone oxide or a mixture of both and the cathode coating preferably comprises a lithium metal oxide or phosphate. Between anode and cathode, a separator and/or an (solid-) electrolyte may be provided for facilitating the flow of ions.

According to an important feature of the present invention, the architecture of a battery cell is changed by modifying the internal cell arrangement (cell stack with the layers of anode, cathode, coating and optionally separator) to allow for an easier gas release and reduced pressure build up within it, by introducing predetermined degassing channels and/or vulnerability points in the form of weakened portions. In case of a thermal runaway event in the battery cell, such vulnerability points allow that the paths of weakness between adjacent weakened portions of the respective layers may rip such that the respective weakened portions are in fluid communication with each other and the teared open paths of weakness form a type of degassing channels. Thereby, the cells behaviour during thermal runaway is significantly improved and the handling and operational safety of the cells is increased. This concept can be realized through various different modifications of the cell architecture, including changes to current collector layers/foils, active material coatings, as well as optionally to separators, for example.

The mechanism for degassing cells is a holistic approach for increasing the safety of cells, regardless of their energy content, as it prevents the build-up of pressure through purely architectural/mechanical means. It thus enables new cells with higher specific energy and new, more reactive materials

The battery cell according to the present invention, with its change to the cells architecture and degassing abilities, increases the safety of the cell by reducing the severity of the cell reaction or even preventing it. This increase in operational safety enables the practical use of new, more reactive materials with higher specific energies, which have been known for a period of time but so far been too difficult to use due to their uncontrollable reactivity. Hence, for the industry it opens the ability to a new generation of high-performance, more energy dense / higherspecific energy cells.

Moreover, the increased safety of the cell leads to direct material and weight savings for additional safety measures needed in the battery modules, packs, and supporting structures, as well as structural parts, e.g. compression and frame components.

The proposed architectural design change of the cell allows the gas to be channelled and controlled in a way that prevents a large accumulation of gas in between the layers, therefore allowing for a controlled degassing of the cell's internal structure and hence preventing an explosion-type reaction.

The removal of gas and the increased solvent evaporation can reduce the conductivity of the electrolyte and hence reduces the impact of an internal short circuit, whilst also removing combustible material from the cell. In sum, these effects can highly reduce the TR event. This makes battery cells of the present invention safer and requires less measure to control the cells behaviour during a TR in an application or during processing.

In an embodiment of the present invention, the cell stack may further comprise at least one separator layer, preferably at least one of the coating layers being applied to the at least one separator layer. If the cell stack comprises at least one separator layer, the at least one separator layer may extend substantially over an entire cross-sectional area of the at least one battery cell to thereby efficiently prevent physical contact between anode and cathode, while facilitating ion transport in the cell.

Preferably, all electrode layers and/or all coating layers may comprise the at least one degassing channel, preferably a plurality of degassing channels, and/or the at least one weakened portion, preferably a plurality of weakened portions, preferably pre-defining a plurality of paths of weakness. In this manner, a better thermal runaway behaviour throughout the entire cell arrangement may be provided.

In a preferred embodiment of the present invention, at least one of the coating layers may comprise at least one uncoated area in order to form the at least one predefined degassing channel. Uncoated areas of the coating layers represent a quite simple means for providing pre-defined degassing channels leading out of the battery cell.

Such uncoated areas may be ablated or left out during a coating process, which is easy to implement when manufacturing battery cells according to the present invention.

Preferably, wherein the at least one pre-defined degassing channel and/or the at least one path of weakness extend in a plane of the at least one layer to lead out arising gases of the battery cells over the shortest distance.

In a further preferred embodiment of the present invention, at least one of the electrode layers may be perforated in order to form the at least one weakened portion.

In the embodiment of perforated electrode layers, the at least one of the electrode layers may be perforated by means of a laser perforation process, which in turn is easy to implement when manufacturing battery cells according to the present invention. Alternatively, a die cutting or alike perforation process may also be possible.

Hence, any kind of structural weakening pattern applied to at least one of the electrode layers and/or at least one of the coating layers are suitable for obtaining the least one path of weakness connecting an inner portion of the cell stack with an edge portion of the cell stack.

Particularly preferred does a combination of coating layers comprising uncoated areas and perforated electrode layers paths of weakness, which tear open in case of a thermal runaway event, therefore additionally forming a type of degassing channel, even more increase effectiveness of the provided degassing channels by multiplying their number.

In a further embodiment of the present invention, the cell stack may comprise a plurality of stack portions, each stack portion comprising two electrode layers comprising a cathode layer and an anode layer, optionally at least one separator layer, and coating layers applied to the electrode layers and/or the at least one separator layer, wherein the layers of any stack portion of the plurality of stack portions may be separated from the layers of the other stack portions of the plurality of stack portions by additional layers, preferably consisting of separator material, thereby forming the at least one pre-defined degassing channel. In this manner, the stack portions may be woven together by the additional separator material, thereby providing pre-defined degassing channels between each of the stack portions.

Preferably, the electrode layers may be electrode foils, which may be extremely thin, therefore providing a compact overall arrangement and facilitate applying weakening patterns on the electrode layers to obtain pre-defined degassing channels.

In an embodiment of the present invention, the at least one battery cell may be an opposed sided tab, OST, battery cell. In an alternative embodiment, the at least one battery cell may be a same sided tab, SST, battery cell. Further, the at least one battery cell may be a pouch-type battery cell. Hence, the concept of the present invention is directly applicable on opposed sided tab (OST) as well as same sided tab (SST) design pouch-type cells, as well as other types, e.g. cylindrical and prismatic cells.

According to a second aspect of the present invention, the above-defined object is achieved by a battery assembly comprising a plurality of battery cells according to the first aspect of the present invention.

Further, according to a third aspect of the present invention, the above-defined object is achieved by an electrically driven vertical take-off and landing, VTOL, aircraft comprising the battery assembly according to the second aspect of the present invention. Alternatively, the battery assembly according to the second aspect of the present invention may also be comprised in an electric automotive vehicle.

One or more battery assemblies according to the second aspect of the present invention comprising a plurality of battery cells according to the first aspect of the present invention comprised by an electrically driven VTOL aircraft according to the fourth aspect of the present invention enable the practical use of performance benefits of cells with higher specific energy / energy density, which allow the VTOL aircraft to travel further with the same mass of battery. Similarly, safety features on cells can remove the need of more sophisticated safety elements on module or pack level, which increase the payload and therefore, can enable additional payload for the same flight distance. These and all the above factors directly or indirectly result in direct cost savings for such aircraft itself.

Preferred embodiments of the present invention will now be described in more detail with respect to the accompanying drawings, in which:
- Fig. 1: is a schematic diagram of a prior art pouch-type battery cell stack,
- Fig. 2: is schematic diagram of a prior art opposed sided tab battery cell,
- Fig. 3: is a schematic diagram illustrating an overall operating principle of an opposed sided tab battery cell included in a battery cell according to embodiments of the present invention,
- Fig. 4: is a schematic cross-sectional diagram of a cell stack included in a battery cell according to a first embodiment of the present invention,
- Fig. 5: is a schematic cross-sectional diagram of a cell stack included in a battery cell according to a second embodiment of the present invention,
- Fig. 6: is a schematic cross-sectional diagram of a cell stack included in a battery cell according to a third embodiment of the present invention, and
- Fig. 7: is a schematic cross-sectional diagram of a cell stack included in a battery cell according to a fourth embodiment of the present invention.

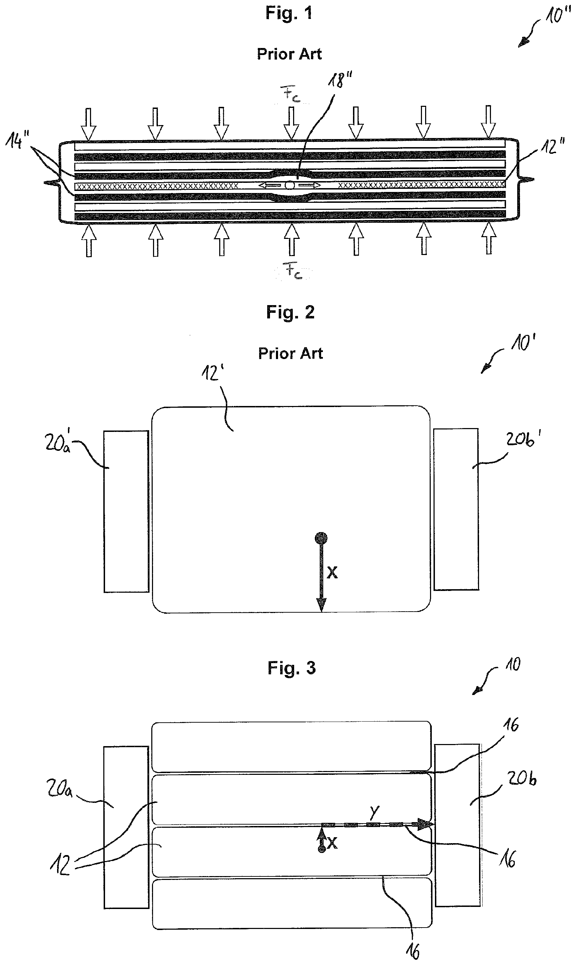

Primarily, an explosion type reaction of a prior art pouch-type battery cell stack 10" is described with reference to Fig. 1. A compression force F_{c} is transmitted to the battery cell 10" through a battery casing or the like. A temperature increase above the shrinking or breakdown temperature of the separator leads to a separator breakdown of separator layers 14" causing an electrolyte evaporation and gas development causing a pressure increase throughout the battery cell 10". Surrounding electrode layers 12" block the gas release and a pressure chamber 18" is formed, in which the pressure keeps increasing, until the electrode layers 12" rip to allow gas being channelled outside of the pouch. Such explosion type reaction is to be prevented by the present invention.

Figs. 2 and 3 represent a comparison between a prior art opposed sided tab (OST) 20a', 20b' battery cell 10' (refer to Fig. 2) and an OST 20a, 20b battery cell 10 (refer to Fig. 3) included in a battery cell according to embodiments of the present invention.

The improved cell architecture, illustrated in Fig. 3, consists of pre-defined degassing channels 16, which are added to the electrodes and/or the coatings 12 applied. In contrast, in the prior art battery cell 10' shown in Fig. 2, no pre-defined degassing channels are included into the active material (i.e. coatings and electrodes) 12'.

The pre-defined degassing channels 16 reduce a distance x from the point of a separator breakdown to the next unconstrained pathway y out of the cell 10. This allows the arising gases to evacuate significantly quicker and reduces the internal pressure needed to reach that pathway y. Thus, a controlled degassing of cell 10 shown in Fig. 3 starts earlier than that of cell 10' shown in Fig. 2, therefore limiting explosion type reactions to a minimum.

Thus, the overall idea of the present invention describes a modification of the internal layers 12 of a battery cell 10 with predefined degassing channels 16 for better removal of gases during a thermal runaway event. Those channels 16 can be implemented in several different ways.

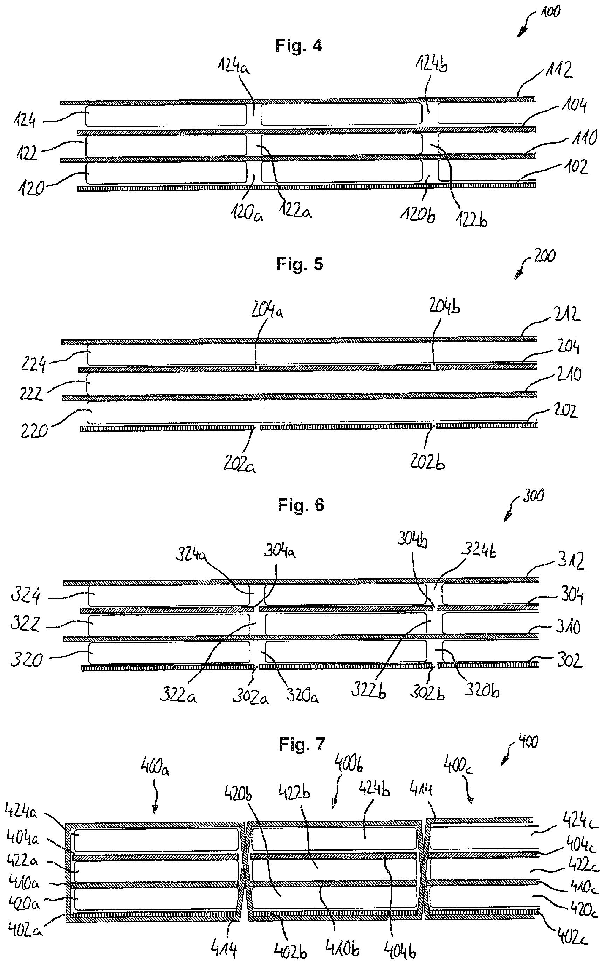

Hence, with reference to Figs. 4 to 7, specific exemplary embodiments of the present invention will be described in the following.

Fig. 4 illustrates a cell stack 100 included in a battery cell according to a first embodiment of the present invention. The battery cell according to the first embodiment comprises the cell stack 100 shown in a schematic cross-sectional view. The cell stack 100 comprises at least two electrode layers embodied by electrode foils 102, 104 in form of a cathode foil 104 and an anode foil 102, separator layers 110, 112 and coating layers 120, 122, 124 applied to the electrode layers 102, 104 and/or the separator layers 110, 112.

According to the first embodiment, small uncoated areas 120a,b, 122a,b, 124a,b in the coatings 120, 122, 124 of the electrode layers 102, 104, which are embodied by electrode foils 102, 104, are used for implementing pre-defined degassing channels. Such uncoated areas 120a,b, 122a,b, 124a,b may either be ablated, e.g. via a laser ablation process or, left out during the coating process itself. Both would lead to the same result and can be adjusted to the cell specific manufacturing process. The pre-defined degassing channels allow for the gas generated during TR to leave the battery cell 100.

Fig. 5 illustrates a cell stack 200 included in a battery cell according to a second embodiment of the present invention. Similar to the battery cell according to the first embodiment, the battery cell according to the second embodiment comprises the cell stack 200 shown in a schematic cross-sectional view. The cell stack 200 in turn comprises at least two electrode layers embodied by electrode foils 202, 204 in form of a cathode foil 204 and an anode foil 202, separator layers 210, 212 and coating layers 220, 222, 224 applied to the electrode layers 202, 204 and/or the separator layers 210, 212.

According to the second embodiment of the present invention, the electrode foils 202, 204 may comprise weakened portions, preferably in the form of perforations 202a,b, 204a,b, for implementing pre-defined paths of weakness instead of degassing channels implemented by uncoated areas. In case of a thermal runaway event in the battery cell, the paths of weakness between adjacent weakened portions, preferably incorporated by perforations or perforated areas 202a,b, 204a,b, respectively, of the electrode layers 202, 204 may rip such that the respective weakened portions 202a,b, 204a,b are in fluid communication with each other and the teared open paths of weakness form a type of degassing channels. For example, the electrode foils 202, 204 may be perforated before the coatings 220, 222, 224 are applied. Through e.g. a die or laser perforation any kind of structural weakening pattern can be implemented into the electrode foils 202, 204 and enables them to tear in a controlled way at the desired pressure and in the required direction. In this manner, the cell internals can separate from another in a controlled fashion and a pathway for degassing may be created.

Fig. 6 illustrates a cell stack 300 included in a battery cell according to a third embodiment of the present invention. A third embodiment in particular is a combination of the first embodiment and the second embodiment. Hence, the battery cell according to the third embodiment in turn comprises the cell stack 300 shown in a schematic cross-sectional view. The cell stack 300 again comprises at least two electrode foils 302, 304, i.e., a cathode foil 304 and an anode foil 302. The cell stack 300 further comprises separator layers 310, 312 and coating layers 320, 322, 324 applied to the electrode layers 302, 304 and/or the separator layers 310, 312.

In the third embodiment, the first and second embodiments are combined as mentioned above. Hence, the coatings 320, 322, 324 comprise uncoated areas 320a,b, 322a,b, 324a for implementing the pre-defined degassing channels and the electrode foils 302, 304 comprise weakened portions embodied by perforations 302a,b, 304a,b for pre-defining the paths of weakness.

Fig. 7 illustrates a cell stack 400 included in a battery cell according to a fourth embodiment of the present invention. The battery cell according to the fourth embodiment comprises the cell stack 400, wherein the cell stack 400 comprises a plurality of stack portions 400a, 400b, 400c. In the fourth embodiment, the cell stack 400 comprises three stack portions 400a, 400b, 400c. Each stack portion 400a, 400b, 400c comprises at least two electrode layers 402, 404, i.e., a cathode 404 and an anode 402, a separator layer 410, and coating layers 420, 422, 424 applied to the electrode layers 402, 404 and/or the separator layer 410. In the fourth embodiment, the layers of any stack portion 400a, 400b, 400c are separated from the layers of the other stack portions 400a, 400b, 400c by additional layers 414, preferably consisting of separator material, thereby forming pre-defined degassing channels.

Hence, a fourth approach considers multiple independent stack portions 400a, 400b, 400c, which for example may be stacked in parallel to one another independently and pre-assembled through e.g. a woven separator layer 414. These stack portions 400a, 400b, 400c may afterwards joined electrically into one cell stack 400 and one battery cell, respectively, when cell tabs are welded on.

All embodiments described herein follow the strategy of allowing arising gases to escape more quickly from the battery cells and reduce the internal pressure needed for cell degassing. The four described variants herein are just a few to give an example of different levels of modification to a baseline cell architecture.

List of reference signs
- F_{c}: compression force
- x: distance from separator breakdown to next pathway
- y: pathway out of cell
- 10: opposed sided tab battery cell
- 10': prior art opposed sided tab battery cell
- 10": prior art pouch-type battery cell stack
- 12: internal layers of battery cell
- 12': active material
- 12": electrode layers
- 14": separator layers
- 16: degassing channels
- 18": pressure chamber
- 20a, 20b: electrode tabs of OST battery cell
- 20a', 20b': electrode tabs of prior art OST battery cell
- 100: cell stack
- 102, 104: electrode layers
- 110, 112: separator layers
- 120, 122, 124: coating layers
- 120a,b, 122a,b, 124a,b: uncoated areas of coating layers
- 200: cell stack
- 202, 204: electrode layers
- 202a, b, 204a, b: weakened portions of electrode layers
- 210, 212: separator layers
- 220, 222, 224: coating layers
- 300: cell stack
- 302, 304: electrode layers
- 302a, b, 304a, b: weakened portions of electrode layers
- 310, 312: separator layers
- 320, 322, 324: coating layers
- 320a,b, 322a,b, 324a,b: uncoated areas of coating layers
- 400: cell stack
- 400a, 400b, 400c: stack portions
- 402, 404: electrode layers
- 410: separator layers
- 414: additional (woven) separator layers
- 420, 422, 424: coating layers

## Claims

1. High-performance battery cell (10) for driving an electric vehicle, in particular an electric aircraft, comprising
a plurality of layers (12) stacked one to another to form a cell stack (100; 200; 300; 400), the cell stack (100; 200; 300; 400) comprising:
- at least two electrode layers (102, 104; 202, 204; 302, 304; 402, 404) comprising a cathode layer and an anode layer, and
- coating layers (120, 122, 124; 220, 222, 224; 320, 322, 324; 420, 422, 424) applied to the electrode layers (102, 104; 202, 204; 302, 304; 402, 404),
**characterized in that**
at least one of the electrode layers (102, 104; 202, 204; 302, 304; 402, 404) and/or at least one of the coating layers (120, 122, 124; 220, 222, 224; 320, 322, 324; 420, 422, 424) comprises
at least one degassing channel (16) connecting an inner portion of the cell stack (100; 300; 400) with an edge portion of the cell stack (100; 300; 400), and/or
at least one weakened portion (202a,b, 204a,b; 302a,b, 304a,b) pre-defining at least one path of weakness connecting an inner portion of the cell stack (200; 300; 400) with an edge portion of the cell stack (200; 300; 400).

2. Battery cell (10) according to claim 1,
wherein the cell stack (12) further comprises at least one separator layer (110, 112; 210, 212; 310, 312; 410), preferably at least one of the coating layers (120, 122, 124; 220, 222, 224; 320, 322, 324; 420, 422, 424) being applied to the at least one separator layer (110, 112; 210, 212; 310, 312; 410).

3. Battery cell (10) according to claim 2,
wherein the at least one separator layer (110, 112; 210, 212; 310, 312) extends substantially over an entire cross-sectional area of the battery cell (10).

4. Battery cell (10) according to any of claims 1 to 3,
wherein all electrode layers (202, 204; 302, 304) and/or all coating layers (120, 122, 124; 320, 322, 324) comprise
the at least one degassing channel (16), preferably a plurality of degassing channels (16), and/or
the at least one weakened portion (202a,b, 204a,b; 302a,b, 304a,b), preferably a plurality of weakened portions (202a,b, 204a,b; 302a,b, 304a,b), preferably pre-defining a plurality of paths of weakness.

5. Battery cell according to any of claims 1 to 4,
wherein at least one of the coating layers (120, 122, 124; 320, 322, 324) comprises at least one uncoated area (120a,b, 122a,b, 124a,b; 320a,b, 322a,b, 324a,b) in order to form the at least one pre-defined degassing channel (16).

6. Battery cell according to claim 5,
wherein the at least one uncoated area (120a,b, 122a,b, 124a,b; 320a,b, 322a,b, 324a,b) is ablated or left out during a coating process.

7. Battery cell (10) according to any of claims 1 to 6,
wherein the at least one pre-defined degassing channel (16) and/or the at least one path of weakness extend in a plane of the at least one layer (12).

8. Battery cell according to any of claims 1 to 6,
wherein at least one of the electrode layers (202, 204; 302, 304) is perforated in order to form the at least one weakened portion (202a,b, 204a,b; 302a,b, 304a,b).

9. Battery cell according to claim 8,
wherein the at least one of the electrode layers (202, 204; 302, 304) is perforated by means of a laser perforation process.

10. Battery cell according to any of claims 1 and 3 to 9,
wherein the cell stack (400) comprises a plurality of stack portions (400a, 400b, 400c), each stack portion (400a, 400b, 400c) comprising:
- two electrode layers (402, 404) comprising a cathode layer (404) and an anode layer (402),
- optionally at least one separator layer (410), and
- coating layers (420, 422, 424) applied to the electrode layers (402, 404) and/or the at least one separator layer (410),
wherein the layers of any stack portion (400a, 400b, 400c) of the plurality of stack portions (400a, 400b, 400c) are separated from the layers of the other stack portions (400a, 400b, 400c) of the plurality of stack portions (400a, 400b, 400c) by additional layers (414), preferably consisting of separator material, thereby forming the at least one pre-defined degassing channel (12).

11. Battery cell (10) according to any of claims 1 to 10,
wherein the electrode layers (102, 104; 202, 204; 302, 304; 402, 404) are electrode foils.

12. Battery cell (10) according to any of claims 1 to 11,
wherein the battery cell (10) is an opposed sided tab, OST, battery cell.

13. Battery cell according to any of claims 1 to 11,
wherein the battery cell is a same sided tab, SST, battery cell.

14. Battery cell (10) according to any of claims 1 to 13,
wherein the battery cell (10) is a pouch-type battery cell.

15. Battery assembly comprising a plurality of battery cells according to any of claims 1 to 14.

16. Electrically driven vertical take-off and landing, VTOL, aircraft comprising the battery assembly according to claim 15.
